# EUROPÄISCHE PATENTANMELDUNG

(11) **EP 2 538 455 A1**
(43) Veröffentlichungstag der Anmeldung: **26.12.2012**
(21) Anmeldenummer: 11171355.8
(22) Anmeldetag: 24.06.2011
(51) Int. Cl.: H01L 31/045

(54) **Transportables Kleinkraftwerk zur Umwandlung von Sonnenlicht in elektrische Energie sowie ein Verfahren zur Errichtung eines solchen Kleinkraftwerkes**

(71) Anmelder: Hafenbahn GmbH & Co. KG, 48431 Rheine (DE)
(72) Erfinder: Brinkmann, Manfred, 48431 Rheine (DE); Haase, Peer, 48429 Rheine (DE)
(74) Vertreter: Berkenbrink, Kai-Oliver

(57) **Zusammenfassung**

Die Erfindung betrifft ein transportables Kleinkraftwerk zur Umwandlung von Sonnenlicht in elektrische Energie sowie ein Verfahren zur Errichtung eines solchen Kleinkraftwerkes

## Beschreibung

Die Erfindung betrifft ein transportables Kleinkraftwerk zur Umwandlung von Sonnenlicht in elektrische Energie sowie ein Verfahren zur Errichtung eines solchen Kleinkraftwerkes

Kleinkraftwerke zur Umwandlung von Sonnenlicht in elektrische Energie sind bekannt. Solche Kleinkraftwerke bestehen in der Regel aus einem Aufsteller und einem oder mehreren daran befestigten Solarmodulen.

Die Aufsteller sind in der Regel aus Metallprofilen gefertigt und umfassen üblicherweise ein erstes, insbesondere rahmenartiges Vorrichtungsteil, das auf einen Untergrund auflegbar ist, und ein zweites Vorrichtungsteil, das in einer schrägen Stellung zum ersten Vorrichtungsteil halterbar ist.

Bei den Solarmodulen beziehungsweise Solarpaneelen handelt es sich um Photovoltaik-Module, mit deren Hilfe Sonnenenergie in elektrische Energie beziehungsweise elektrischen Strom umgewandelt werden kann.

Zur Errichtung eines Kleinkraftwerkes werden die Aufsteller auf einem gewünschten Untergrund, beispielsweise einem Flachdach, aufgebaut. Dabei werden üblicherweise mehrere Aufsteller nebeneinander aufgebaut. Nach Aufstellung und Befestigung des Aufstellers auf dem Untergrund werden die Solarpaneele an dem Aufsteller befestigt. Hierzu werden die tafelartigen Solarmodule beziehungsweise Solarpaneele in der Regel an dem zweiten Vorrichtungsteil des Aufstellers, das in einer schrägen Stellung zum ersten Vorrichtungsteil halterbar ist, angeschraubt, so dass die Solarmodule in einem schrägen Winkel zum Untergrund und damit in einem günstigen Winkel zur Sonne ausgerichtet sind.

Nachdem die Solarmodule an dem Aufsteller befestigt sind, erhält man ein Kleinkraftwerk, das zur Erzeugung elektrischer Energie in Betrieb genommen werden kann. Dabei können zur Errichtung eines Solarkraftwerkes gegebenenfalls mehrere solcher Kleinkraftwerke elektrisch miteinander verschaltet werden.

Grundsätzlich haben sich Aufsteller der vorgenannten Art mit daran befestigten Solarmodulen zur Errichtung von Kleinkraftwerken beziehungsweise Solarkraftwerken bewährt. Für viele Anwendungen wäre es jedoch vorteilhaft, wenn Kleinkraftwerke zur Umwandlung von Sonnenlicht in elektrische Energie einfacher zu errichten wäre. So sind beispielsweise die heutzutage üblichen Aufsteller aus Metallprofilen sperrig, so dass diese nur auf einer größeren Ladefläche eines Kraftwagens transportierbar sind. Ferner sind die Aufsteller und die Solarmodule getrennt voneinander an den gewünschten Aufstellungsort des Kleinkraftwerkes zu transportieren und die Solarmodule dort durch fachkundiges Personal am Aufsteller zu befestigen. Nach Errichtung des Kleinkraftwerkes ist dieses nicht mehr transportierbar. Zum Abbau eines solches Kleinkraftwerkes, beispielsweise um dieses an einem anderen Aufstellungsort wieder zu errichten, sind die Solarmodule daher wieder durch fachkundiges Personal von den Aufstellern zu lösen und getrennt von den Aufstellern an den neuen, gewünschten Ausgangsort zu transportieren.

Der Erfindung liegt die Aufgabe zu Grunde, ein Kleinkraftwerk zur Umwandlung von Sonnenlicht in elektrische Energie zur Verfügung zu stellen, das einfacher handhabbar ist.

Zur Lösung dieser Aufgabe wird ein transportables Kleinkraftwerk zur Umwandlung von Sonnenlicht in elektrische Energie mit folgenden Merkmalen zur Verfügung gestellt:
- einem Aufsteller, der eine erste Position und eine zweite Position einnehmen kann, wobei der Aufsteller
- aus Kunststoff gefertigt ist,
- wenigstens eine Befestigungsfläche aufweist, die derart ausgebildet ist, dass auf diese eine Dünnschichtsolarzelle aufbringbar ist,
- in der ersten Position stapelbar ist und
- in der zweiten Position derart auf einem Untergrund aufstellbar ist, dass die Befestigungsfläche schräg zum Untergrund verläuft;
- einer Dünnschichtsolarzelle, die
- auf die Befestigungsfläche aufgebracht ist.

Eine Grundidee der Erfindung besteht darin, wenigstens eine Dünnschichtsolarzelleauf die Befestigungsfläche des Aufstellers aufzubringen beziehungsweise an dieser zu befestigen.

Dünnschichtsolarzellen werden zur Erzeugung von elektrischer Energie aus Sonnenlicht heutzutage üblicherweise auf Bauelemente, wie beispielsweise Fassaden, Dachziegel oder Beschattungsmittel für Gebäude aufgebracht, Bekannt ist auch, das Halbleitermaterial von Dünnschichtsolarzellen auf flexible Trägermaterialien aufzubringen, so dass man eine flexible Dünnschichtsolarzelle beziehungsweise ein flexibles Dünrischichtsolarmodul erhält. Solch flexible Dünschichtsolarmodule können beispielsweise auf Kleidung aufgenäht werden, beispielsweise um während einer Treckingtour elektrischen Strom gewinnen zu können.

Unbekannt war es bisher jedoch, Dünnschichtsolarzellen auf Aufsteller zur Errichtung eines Kleinkraftwerkes beziehungsweise einer Solaranlage aufzubringen. Hierzu bestand bisher auch weder eine Notwendigkeit, noch hätte eine solche Maßnahme Sinn ergeben. Denn die regelmäßig an Aufstellern befestigten, tafelförmigen Dickschichtsolarzellen sind in der Regel billiger und weisen einen höheren Wirkungsgrad auf als Dünnsehichtsoiarzellen. Sinn ergibt die Maßnahme, eine Dünnschichtsolarzelle unmittelbar auf einen Aufsteller aufzubringen, allein in Kombination mit einer weiteren erfindungsgemäßen Idee, nämlich eine Dünnschichtsolarzelle auf einen Solarmodulaufsteller aus Kunststoff aufzubringen. Denn ein Kleinkraftwerk aus einem Aufsteller aus Kunststoff mit einer darauf aufgebrachten Dünnschichtsolarzelle weist ein solch geringes Gewicht auf, dass das Kleinkraftwerk sehr einfach handhabbar und insbesondere auch einfach transportierbar ist. Ein wesentlicher Vorteil des erfindungsgemäßen Kleinkraftwerkes ist seine einfachere Transportierbarkeit gegenüber Kleinkraftwerken nach dem Stand der Technik.

Auf Grund der einfachen Transportierbarkeit des erfindungsgemäßen Kleinkraftwerkes erhält man ein mobiles Kleinkraftwerk, das einfach zu transportieren, aufzustellen und ohne weitere konstruktive Maßnahmen von einer Person unmittelbar in Betrieb genommen werden kann. Beispielsweise kann das erfindungsgemäße Kleinkraftwerk von nur einer Person transportiert werden, beispielsweise in ein Fahrzeug geladen werden, aus diesem entnommen und an den gewünschten Aufstellungsort transportiert und dort errichtet werden. So kann das erfindungsgemäße, transportable Kleinkraftwerk bei einem Gewicht von beispielsweise höchstens 30 kg, also beispielsweise auch höchstens 20 kg, 15 kg oder nur höchstens 10 kg, gleichzeitig eine Leistung von beispielsweise wenigstens 50 Watt aufweisen, also auch von beispielsweise wenigstens 30 Watt, 50 Watt, 80 Watt oder von wenigstens 100 Watt. Beispielsweise kann die durch ein erfindungsgemäßes, transportables Kleinkraftwerk installierbare Leistung bis zu 200 Watt oder auch bis zu 400 Watt betragen.

Die Handhabbarkeit und Transportierbarkeit des erfindungsgemäßen. Kleinkraftwerkes wird zusätzlich dadurch erleichtert, dass der Aufsteller des Kleinkraftwerkes erfindungsgemäß eine Position einnehmen kann, in der der Aufsteller stapelbar ist. In dieser Position des Aufstellers, die hierin als "erste Position" bezeichnet wird, ist damit auch das erfindungsgemäße, transportable Kleinkraftwerk stabelbar, da die Dünnschichtsolarzelle an der Befestigungsfläche des Aufstellers befestigt ist. Unter "Stapelbarkeit" wird hierin verstanden, dass mehrere Aufsteller beziehungsweise erfindungsgemäße Kleinkraftwerke platzsparend übereinander gestapelt werden können. Beispielsweise können mehrere Kleinkraftwerke übereinander auf einer Palette oder der Ladefläche eines Kraftfahrzeuges platzsparend gestapelt und als Stapel transportiert werden.

Bevorzugt ist vorgesehen, dass der Aufsteller eine solche Form aufweist, dass er in der ersten Position insgesamt eine im wesentlichen plattenförmige Gestalt aufweist beziehungsweise eine im Wesentlichen tafelförmige oder quaderförmige Gestalt. Hierdurch ist der Aufsteller beziehungsweise das erfindungsgemäße Kleinkraftwerk in der ersten Position besonders einfach und platzsparend stapelbar.

Der Aufsteller ist bevorzugt derart ausgebildet, dass er in der ersten Position eine Dicke von maximal 20 cm einnimmt, also beispielsweise auch eine Dicke von maximal 15 cm oder von maximal 10 cm.

Der Aufsteller kann eine von der ersten Position verschiedene Position einnehmen, die hierin als "zweite Position" angegeben ist und in der der Aufsteller derart auf einem Untergrund aufstellbar ist, dass die Befestigungsfläche schräg zum Untergrund verläuft. Bevorzug ist der Aufsteller derart ausgebildet, dass die Befestigungsfläche in einem Winkel zwischen 10 und 45, also beispielsweise auch in einem Winkel zwischen 20 und 35 Grad oder in einem Winkel zwischen 25 und 30 Grad zum Untergrund geneigt ist, wenn der Aufsteller in der zweiten Position auf einem Untergrund aufgestellt ist. Eine solche Ausbildung hat den Vorteil, dass die Dünnschichtsolarzeile ohne weitere Maßnahmen in einer optimalen Ausrichtung zur Sonne an der Befestigungsfläche befestigt ist, wenn das Kleinkraftwerk in der zweiten Position auf einem Untergrund aufgestellt ist.

Nach einer besonders bevorzugten Ausführungsform ist der Aufsteller derart ausgebildet, dass er von der ersten Position in die zweite Position klappbar ist. Nach einem Transport des erfindungsgemäßen Kleinkraftwerkes an den gewünschten Aufstellungsort kann das Kleinkraftwerk damit einfach, und schnell auch von ungeübten Personen von der ersten in die zweite Position geklappt und errichtet werden. Da dieser Vorgang auch schnell und einfach reversibel ist, kann das Kleinkraftwerk auch wiederum schnell und einfach von der zweiten Position in die erste Position zurückgeklappt werden, beispielsweise um das Kleinkraftwerk wieder abzubauen.

Der Aufsteller ist bevorzugt derart ausgebildet, dass er in der zweiten Position auf einem Untergrund, bevorzugt einem im Wesentlichen horizontalen Untergrund, beispielsweise einem Flachdach, aufstellbar beziehungsweise errichtbar ist. Da der Aufsteller des erfindungsgemäßen Kleinkraftwerkes aus Kunststoff gefertigt ist und damit ein nur verhältnismäßig geringes Gewicht aufweist, kann vorgesehen sein, dass der Aufsteller Abschnitte aufweist, auf die in der zweiten Position Beschwerungsmittel auflegbar sind. Hierdurch kann ein unbeabsichtigtes Verrücken des Kleinkraftwerkes, insbesondere durch Wind, vermieden werden. Beschwerungsmittel können beispielsweise in Form von Steinen, Sand oder Kies vorgesehen sein.

Der Aufsteller des erfindungsgemäßen Kleinkraftwerkes besteht aus Kunststoff, also einem PolymermateriaL Dabei besteht der Aufsteller, zumindest in dem Abschnitt, an dem die Befestigungsfläche ausgebildet ist, aus einem Kunststoff, auf den eine Dünnschichtsolarzelle aufgebracht werden kann. Beispielsweise besteht der Aufsteller aus einem thermoplastischen Kunststoff, besonders bevorzugt aus Polypropylen (PP), aufgrund seiner guten Verschleißfestigkeit. Alternativ kann der Aufstellen aus Polyethylen (PE) oder Polystyrol (PS) bestehen,

Bevorzugt ist der Aufsteller aus einer oder mehreren Kunststoffplatten ausgebildet. Besonders bevorzugt weist der Aufsteller mehrere Abschnitte auf, die bevorzugt jeweils plattenartig gestaltet sein können, und die gegeneinander schwenkbar miteinander verbunden sind. Beispielsweise können die Abschnitte des Aufsteller über Scharniere, beispielsweise Filmscharniere, miteinander verbunden sein. Ein aus einer oder mehreren Kunststoffplatten bestehender Aufsteller lässt sich besonders einfach uns kostengünstig herstellen. Indem der Aufsteller ferner mehrere miteinander verbundene, gegeneinander verschwenkbare Abschnitte aufweist, lässt er sich besonders einfach zwischen der ersten Position und zweiten Position hin- und herklappen.

Nach einer bevorzugten Ausführungsform ist der Aufsteller aus einer einzigen Kunststoffplatte gefertigt. Diese einzige Kunststoffplatte kann bevorzugt in mehrere Abschnitte unterteilt sein, beispielsweise durch eine oder mehrere Stanzungen oder sonstige Materialschwachungen, die jeweils eine Knickkante ausbilden und entlang derer die Platte knickbar ist beziehungsweise entlang derer die Abschnitte gegeneinander schwenkbar sind.

Bevorzugt ist der Aufsteller, insbesondere ein aus einer oder mehreren Kunststoffplatten gefertigter Aufsteller, derart gestaltet, dass die Abschnitte in der ersten Position des Aufstellers parallel zueinander angeordnet sind, so dass sich insgesamt eine plattenförmige und damit eine gut stapelbare Gestalt des Aufstellers ergibt.

Nach einer Ausführungsform kann der Aufsteller im Wesentlichen drei Abschnitte aufweisen: Einen ersten Abschnitt, der in der zweiten Position des Aufstellers auf einen Untergrund auflegbar ist und von dem sich der zweite Abschnitt und der dritte Abschnitt nach oben erstrecken. Der erste Abschnitt kann bevorzugt derart ausgebildet sein, dass auf diesen Bescbwerungsmittel auflegbar sind. Der zweite Abschnitt kann beispielsweise derart am ersten Abschnitt angeordnet sein, dass er sich bei Auflage des ersten Abschnittes auf einem Untergrund in der zweiten Position des Aufstellers schräg nach oben von diesem weg erstreckt. Der dritte Abschnitt kann beispielsweise derart am ersten Abschnitt angeordnet sein, dass er sich bei Auflage des ersten Abschnittes auf einem Untergrund in der zweiten Position des Aufstellers derart nach oben von diesem weg erstreckt, dass er den zweiten Abschnitt in der schrägen Stellung haltert beziehungsweise abstutzt. Der zweite und der dritte Abschnitt können insoweit in der zweiten Position des Aufstellers die Form eines Daches bilden. Der zweite Abschnitt kann auf seiner einen Seite einen Winkel < 90° zwischen sich und dem ersten Abschnitt einschließen, bevorzugt einen Winkel im Bereich von 20 bis 35°, und auf seiner anderen, nach außen gerichteten Seite die Befestigungsfläche bilden. Bei Aufstellung des Aufsteller über den ersten Abschnitt auf einem Untergrund in der zweiten Position ist der zweite Abschnitt damit automatisch in einem Winkel zwischen 20 und 35° zum Untergrund angeordnet und damit in einem optimalen Winkel zur Sonne ausgerichtet. Eine an der Befestigungsfläche befestigte Dünnschichtsolarzelle ist damit automatisch in einem optimalen Winkel zur Sonne ausgerichtet.

Es kann vorgesehen sein, dass der Aufsteller Arretiermittel aufweist, über die der Aufsteller jeweils in der ersten und zweiten Position arretierbar ist. Hierdurch kann ein unbeabsichtigtes Zusammenklappen des Aufstellers in der zweiten Position beziehungsweise ein unbeabsichtigtes Aufklappen des Aufstellers in der ersten Position verhindert werden.

Nach einer besonders bevorzugten Ausführungsform ist vorgesehen, dass der Aufsteller aus wenigstens einer Kunststoffstrukturkammerplatte gefertigt ist. Kunststoffstrukturkammerplatten sind besonders einfach und kostengünstig herstellbar und weisen gleichzeitig eine hohe Festigkeit auf. Kunststoffstrukturkammerplatten bestehen aus zwei ebenen Kunststoffdeckschichten, zwischen denen eine strukturierte Kunststoffmittelschicht angeordnet wird. Die Kunststoffmittelschicht kann beispielsweise genoppt oder profiliert ausgebildet sein. In ihrem Aufbau ähneln Kunststoffstrukturkammerplatten damit dem Aufbau von Wellpappe. Kunststoffstrukturkammerplatten zeichnen sich durch eine sehr hohe Festigkeit, insbesondere eine hohe Biegesteifigkeit, bei einem gleichzeitig nur verhältnismäßig geringen Gewicht auf. Erfindungsgemäß hat sich herausgestellt, dass entsprechende Kunststoffstrukturkammerplatten hervorragend zur Errichtung des erfindungsgemäßen, transportablen Kleinkraftwerkes geeignet sind. Als Kunststoffe für die Kunststoffstrukturkammerplatte kommen beispielsweise die zuvor genannten Kunststoffe in Frage, aus denen der Aufsteller gefertigt ist.

Auf die Befestigungsfläche kann wenigstens eine Dünnschichtsolarzelle aufgebracht sein, also beispielsweise auch mehrere, beispielsweise auch mehrere unterschiedlich gestaltete Dünnschicbtsolarzellen.

Dünnschichtsolarzellen bestehen aus Halbleitermaterialien, die auf ein Trägermaterial aufgetragen sind, beispielsweise auf dieses aufgedampft oder durch Gasabscheidung aufgetragen sind. Als Trägermaterialien sind starre Materialien bekannt, beispielsweise Glas, aber auch flexible Trägermaterialien.

Nach einer vorteilhaften Ausführungsform ist vorgesehen, dass die Dünnschichtsolarzelle des erfindungsgemäßen Kleinkraftwerkes ein flexibles Trägermaterial aufweist. Hierdurch liegt insgesamt eine flexible Dünnschichtsolarzelle vor. Als flexibles Trägermaterialien für die Dünnschichtsolarzelle des erfindungsgemäßen Kleinkraftwerkes kommen grundsätzlich sämtliche flexible Trägermaterialien nach dem Stand der Technik in Frage, beispielsweise Kunststofffolien, Metallfolien oder Gewebe. Erfindungsgemäß haben sich insbesondere Trägermaterialien aus Kunststoff, insbesondere flexible Kunststofffolien, als vorteilhaftes Trägermaterial für die Dünnschichtsolarzelle des erfindungsgemäßen Kleinkraftwerkes herausgestellt, beispielsweise Polyimid-Folien. Denn Dünnschichtsolarzeilen mit einem Trägermaterial in Form einer flexiblen Kunststofffolie lassen sich sehr vorteilhaft auf die Befestigungsfläche aufbringen. Erfindungsgemäß hat sich herausgestellt, dass Dünnschichtsolarzellen, insbesondere mit einem Trägermaterial in Form einer flexiblen Kunststofffolie, sehr vorteilhaft auf die Befestigungsfläche aufgeklebt werden können. Erfindungsgemäß kann demnach insbesondere vorgesehen sein, dass die Dünnschichtsolarzelle auf die Befestigungsfläche aufgeklebt ist. Die Dünnschichtsolarzelle ist demnach mittels eines Klebstoffs an der Befestigungsfläche befestigt. Grundsätzlich kann die Dunnschichtsolarzelle über einen beliebigen Klebstoff nach dem Stand der Technik an der Befestigungsfläche aufgeklebt sein, insbesondere über Klebstoffe, über die zwei Substrate, die nicht oder nur in geringem Maße wasser- und lösemitteldurchlässig sind, großflächig miteinander verklebbar sind. Als vorteilhaft für die Verklebung der Dünnschichtsolarzelle auf der Befestigungsfläche haben sich beispielsweise Schmelzklebstoffe herausgestellt. Vorteilhafterweise werden Klebstoffe verwendet, die eine flexible Verbindung zwischen der Dunnschichtsolarzelle und der Befestigungsfläche herstellen. Hierdurch können Spannungen und Kräfte aufgenommen werden, so dass die Dünnschichtsolarzelle, beispielsweise bei einem Transport des erfindungsgemäßen Kleinkraftwerkes, keinen Schaden nimmt.

Nach einer weiteren vorteilhaften Ausgestaltung der Erfindung kann vorgesehen sein, dass die Dünnschichtsolarzelle, insbesondere eine Dünnschichtsolarzelle mit einem flexiblen Trägermaterial, und die Befestigungsfläche ein Laminat bilden. Ein Vorteil dieser Ausführungsform liegt insbesondere in der festen, innigen Verbindung zwischen Dünnschichtsolarzelle und Befestigungsfläche, wenn diese als Laminat miteinander verklebt sind.

Schließlich kann erfindungsgemäß insbesondere auch vorgesehen sein, dass die Dünnschichtsolarzelle unmittelbar auf die Befestigungsfläche aufgebracht ist. Bei dieser Ausführungsform stellt die Befestigungsfläche das Trägermaterial der Dünnschichtsolarzelle dar. Das Halbleitermaterial der Dünnschichtsolarzelle kann bei dieser Ausführungsform demnach unmittelbar auf die Befestigungsfläche aufgebracht sein, beispielsweise mittels Aufdampfen, Gasabscheidung, Bedrucken oder sonstigen Verfahren nach dem Stand der Technik, mittels derer die eine Dünnschichtsolarzelle ausbildenden Halbleitematerialien auf ein Trägermaterial aufgebracht werden können.

Grundsätzlich kann die Dünnschichtsolarzelle auf beliebige Art und Weise an der Befestigungsfläche befestigt sein. Soweit die Dünnschichtsolarzelle ein Trägermaterial, insbesondere ein flexibles Tgrägermaterial aufweist, kann sie beispielsweise auch über Rastmittel oder Klemmmittel auf die Befestigungsfläche aufgebracht beziehungsweise an dieser befestigt sein, also beispielssweise an dieser verrastet oder auf diese aufgeklemmt sein.

Bei der oder den Dünnschichtsolarzellen des erfindungsgemäßen, transportablen Kleinkraftwerkes kann es sich grundsätzlich um beliebige Dünnschichtsolarzellen nach dem Stand der Technik handeln, beispielsweise um Dünnschichtsolarzellen aus amorphen Silizium (a-Si:H) oder aus mikrokristallinem Silizium (µc-Si:H)., um Dünnschichtsolarzellen aus Gallitim-Arsenid (GaAs), Dünnschichtsolarzellen aus Cadmium-Tollurit (CdTe), Dünnschichtschichtsolarzellen aus Cadmium-Selenit (CdSe) oder Cadmium-Sulfit (CdS), Dünnschichtsolarzellen aus Kupfer-Indium-(Gallium)-Schwefel- Selen- Verbindungen (CIS-Zellen oder CIGS-Zellen) oder organische Solarzellen, die aus Kohlenwasserstoffverbindungen aufgebaut sind.

Bevorzugt ist die Dünnschichtsolarzelle als monolithisch verschaltetes Solarmodul ausgebildet.

Die Befestigungsfläche kann vollflächig oder zumindest weitgehend mit einer oder mehreren Dünnschichtsolarzellen bedeckt sein. Mit anderen Worten: Wenigstens eine Dünnschichtsolarzelle ist derart auf die Befestigungsfläche aufgebracht, dass diese vollflächig oder zumindest weitgehend mit wenigstens einer Dünnschichtsolarzelle bedeckt ist. Vorteilhaft ist dabei auch der Umstand, dass Dünnschichtsolarzellen keinen Rahmen oder dergleichen benötigen, in dem die Solarzelle angeordnet ist, so dass die Befcstigungsfiäche praktisch vollständig mit wenigstens einer Dünschichtsolarzelle bedeckt sein kann. Beispielsweise kann die Fläche der Befestigungsfläche zu wenigstens 70 %, also beispielsweise auch zu wenigstens 80 %, 90 % oder 95 % mit wenigstens einer Dünnschichtsolarzeile bedeckt sein.

Die Befestigungsfläche kann beispielsweise eine Fläche in einer Größe von wenigstens 0,1 m² ausbilden, also beispielsweise auch eine Fläche von wenigstens 0,3 m², 0,6 m² oder 0,8 m². Als Obergrenze kann die Befestigungsfläche beispielsweise eine Fläche von maximal 2 m² ausbilden, also beispielsweise auch von maximal 1,7 m², 1,4 m² oder 1,2 m². Bei einer Befestigungsfläche in der vorgenannten Größe ist zum einen noch eine gute Handhabbarkeit und Transportierbarkeit des erfindungsgemäßen Kleinkraftwerkes gewährleistet. Gleichzeitig ist die Fläche ausreichend große um durch die daran befestigten Dünnschichtsolarzellen eine erhebliche Menge an elektrischer Energie zu gewinnen.

Bevorzugt ist die Befestigungsfläche als zumindest weitgehend ebene, durchgehende Fläche ausgebildet. Hierdurch ist gewährleistet, dass die Dünnschichtsolarzelle vollflächig und plan an der Befestigungsfläche anliegen kann. So kann insbesondere eine Dünnschichtsolarzelle mit einem flexiblen Trägermaterial sicher an der Befestigungsfläche befestigt werden kann. Insbesondere ermöglicht eine ebene, durchgehende Befestigungsfläche die Verklebung der Dünnschichtsolarzelle an der Befestigungsfläche beziehungsweise deren Laminierung.

Die Befestigungsfläche kann Öffnungen aufweisen, durch die beispielsweise Kabel durchführbar sind. Ein Vorteil eines aus Kunststoff gefertigten Aufstellers liegt insbesondere auch darin, dass solche Öffnungen ohne Weiteres bauseitig in den, die Befestigungsfläche ausbildenden Teil des Aufstellers eingebracht werden können, beispielsweise den zuvor beschriebenen zweiten Abschnitt des Aufstellers. Entsprechende Öffnungen können damit beispielsweise gezielt und individuell eingebracht werden, ohne dass diese bereits werkseitig in den Aufsteller eingebracht werden müssten, wodurch den am Aufstellungsort gegebenen Erfordernissen nicht stets in ausreichendem Maße Rechnung getragen werden könnte.

Gegenstand der Erfindung ist ferner ein Verfahren zur Errichtung eines transportablen Kleinkraftwerkes zur Umwandlung von Sonnenlicht in elektrische Energie mit folgenden Schritten:
- zur Verfügungstellung eines hierin beschriebenen, transportablen Kleinkraftwerkes;
- Transport des Kleinkraftwerkes an einen Aufstellungsort des Kleinkraftwerkes, wobei der Aufsteller während des Transportes die erste Position einnimmt;
- Errichten des Kleinkraftwerkes auf einem Untergrund am Aufstellungsort des Kleinkraftwerkes, wobei der Aufsteller die zweite Position einnimmt.

Das zur Errichtung des transportablen Kleinkraftwerkes gemäß diesem Verfahren eingesetzte Kleinkraftwerk kann insbesondere wie hierin ausgeführt ausgebildet sein und verwendet werden.

Insbesondere kann bei dem erfindungsgemäßen Verfahren vorgesehen sein, dass die Dünnschichtsolarzelle bereits vor dem Transport des Kleinkraftwerkes an den gewünschten Aufstellungsort auf die Befestigungsfläche aufgebracht wird, so dass das Kleinkraftwerk zu seiner Errichtung zum gewünschten Aufstellungsort nur noch in die zweite Position bewegt und aufgestellt zu werden braucht. Selbstverständlich kann vorgesehen sein, mehrere der erfindungsgemäßen Kleinkraftwerke elektrisch miteinander zu einem Solarkraftwerk zu verbinden.

Sämtliche der hierin offenbarten Merkmale des erfindungsgemäßen, transportablen Kleinkraftwerkes sowie des Verfahrens zur Errichtung eines Kleinkraftwerkes können, einzeln oder in Kombination, beliebig miteinander kombiniert sein.

Ein Ausführungsbeispiel eines erfindungsgemäßen, transportablen Kleinkraftwerkes soll anhand der nachfolgenden Figurenbeschreibung näher erläutert werden, dabei zeigt, jeweils stark schematisiert,
- Figur 1: eine perspektivische Ansicht eines Kleinkraftwerkes schräg von der Seite, wobei der Aufsteller die zweite Position einnimmt,

- Figur 2: eine Ansichtung des Kleinkraftwerkes nach Figur 1 von der Seite,
- Figur 3: eine Ansicht des Kleinkraftwerkes nach Figur 1 von der Seite, wobei der Aufsteller die erste Position einnimmt und
- Figur 4: eine Ansicht des Kleinkraftwerkes nach Figur 1, während der Aufsteller von der ersten Position nach Figur 3 in die zweite Position nach den Figuren 1 und 2 geklappt wird.

Das insgesamt mit dem Bezugszeichen 1 gekennzeichnete, transportable Kleinkraftwerk weist einen aus Kunststoff gefertigten Aufsteller 3 auf. Der Aufsteller 3 umfasst vier Kunststoffstrukturkammerplatten 5, 7, 9, 11, die über Filmscharniere 13, 15, 17, 19 gegeneinander schwenkbar miteinander verbunden sind. Dabei bilden die Platten 5, 7, die über ein Filmscharnier 19 miteinander verbunden sind, einen ersten Abschnitt des Aufstellers 3, über den dieser auf einem Untergrund aufstellbar ist. An den gegenüberliegenden, äußeren Längskanten der Platten 5, 7, die parallel zum Filmscharnier 19 verlaufen, sind die beiden anderen Strukturkammerplatten 11, 19 des Aufstellers 3 angeordnet. Dabei ist die Kunststoffstrukturkammerplatte 9 über ein Filmscharnier 15 an der einen Längskante und die Kunststoffstrukturkammerplatte 11 über ein Scharnier 17 an der anderen Längskante angeordnet. Die beiden Kunststoffstrukturkammerplatten 9, 11 laufen schräg nach oben aufeinander zu und sind an ihrem oberen Kontaktbereich über ein Filmscharnier 13 miteinander verbunden.

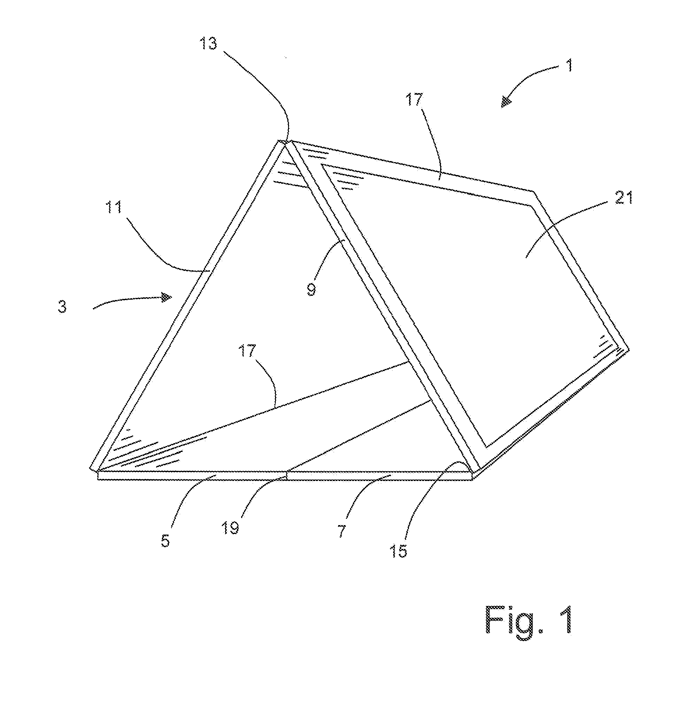

Insgesamt bilden die Kunststoffstrukturkammerplatten 9, 11 damit die Form eines Satteldaches aus. Die Kunststoffstrukturkammerplatte 9 bildet einen zweiten Abschnitt des Aufstellers 3, an dem die Befestigungsfläche 17 zur Befestigung einer Dünnschichtsolarzelle 21 ausgebildet ist. Die Kunststoffstrukturkammerplatte 11 ist als dritter Abschnitt des Aufsteller 3 ausgebildet, der die Kunststoffstrukturkammerplatte 9 in der in Figur 1 dargestellten, schrägen Stellung haltert.

Der Aufsteller 3 nimmt in Figur 1 die zweite Position ein, Dabei liegen die Kunststoffstrukturkammerplatten 5, 7 des Aufstellers 3 auf einem Untergrund auf, so dass das Kleinkraftwerk 1 auf dem Untergrund errichtet ist. Die Kunststoffstrukturkammerplatte 9 schließt mit dem aus den Kunststoffstrukturkammerplatten 5. 7 gebildeten, ersten Abschnitt des Ausstellers 3 einen Winkel von etwa 30° ein. Entsprechend verläuft die auf der Außenseite der Kurtststoffstrukturkammerplatte 9 ausgebildete Befestigungsfläche 17 schräg zum Untergrund in einem Winkel von 30°.

Auf die Befestigungsfläche 17 ist eine Dünnschichtsolarzelle 21 durch einen Klebstoff aufgeklebt. Die Befestigungsfläche 17 ist weitgehend mit der Dünnschichtsolarzelle 21 bedeckt, wobei etwa 90 % der Fläche der Befestigungsfläche 17 von der Dtnnschiehtsolarzelie 21 bedeckt sind. Die Dünnschichisolarzelle 21 weist ein flexibles Trägermaterial in Form einer flexiblen Kunststofffolie auf.

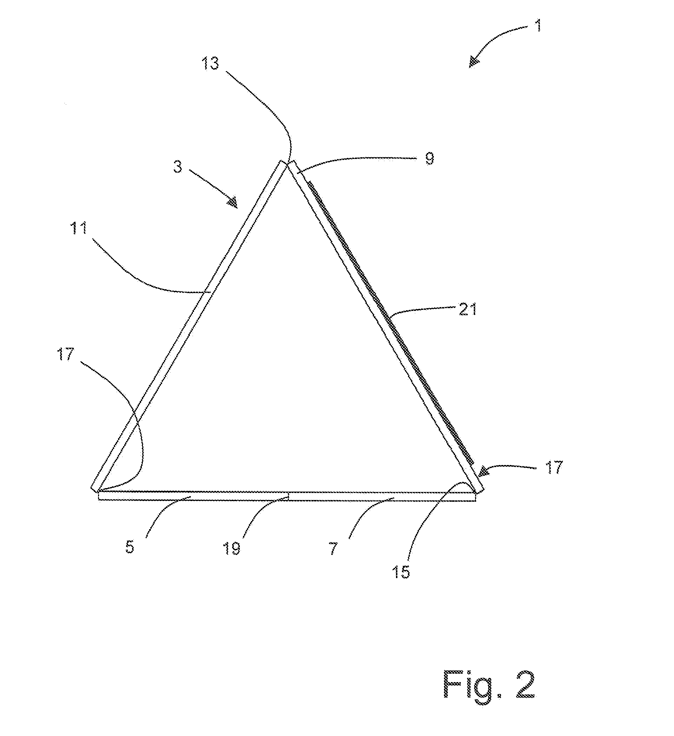

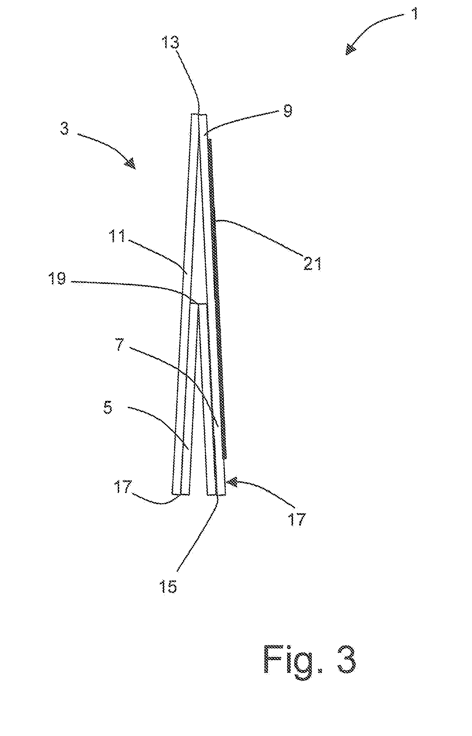

Während die Figuren 1 und 2 das errichtete, transportable Kleinkraftwerk 1 zeigen, bei dem der Aufsteller 3 die zweite Position einnimmt, zeigt Figur 3 das Kleinkraftwerk 1, bei dem der Aufsteller 3 die erste Position einnimmt. Dabei weist der Aufsteller 3 beziehungsweise das Kleinkraftwerk 1 eine im wesentlichen platten- beziehungsweise tafelförmige Form auf, so dass mehrere entsprechend gestalteter Kleinkraftwerke 1 ohne Weiteres platzsparend übereinander stapelbar sind.

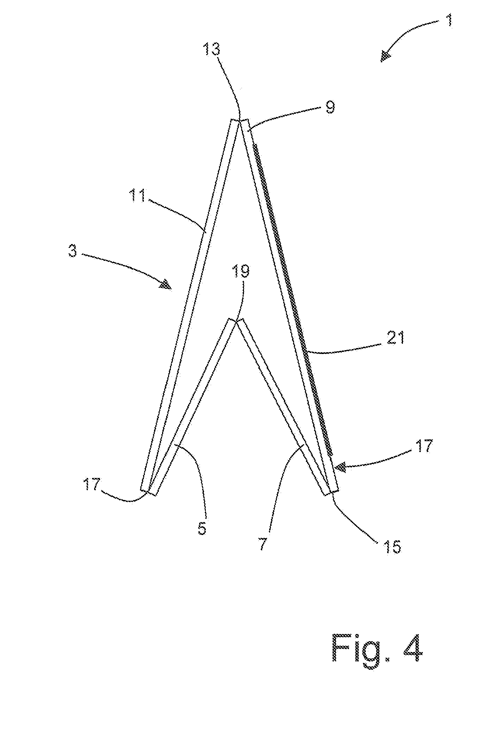

Figur 4 zeigt das transportable Kleinkraftwerk 1 während des Klappvorgangs, also in einer Zwischenposition zwischen der ersten und zweiten Position.

Gut zu erkennen ist in den Figuren 3 und 4, dass die Kunststoffstrukturkammerplatten 5, 7, 9, 11 derart dimensioniert und über die Filmscharniere 13, 15, 17, 19 derart miteinander verbunden sind, dass der Aufsteller 3 von der ersten in die zweite Position aufklappbar und von der zweiten in die erste Position zusammenklappbar ist.

Zur Errichtung des transportablen Kleinkraftwerkes 1 auf einem Untergrund wird ein transportables Kleinkraftwerk 1 in der ersten Position gemäß Figur 3 an den gewünschten Aufstellungsort des Kleinkraftwerkes 1 transportiert, am Aufstellungsort in die zweite Position gemäß den Figuren 1 und 2 geklappt und dort über die Kunststoffstrukturkammerplatten 5, 7 des Aufstellers 3 auf einem Untergrund aufgestellt. Das Kleinkraftwerk 1 kann daraufhin unmittelbar in Betrieb genommen werden.

## Patentansprüche

1. Transportables Kleiukraitwerk (1) zur Umwandlung von Sonnenlicht in elektrische Energie mit folgenden Merkmalen:
1.1 einem Aufsteller (3), der eine erste Position und eine zweite Position einnehmen kann, wobei der Aufsteller (3)
1.1.1 aus Kunststoff gefertigt ist,
1.1.2 wenigstens eine Befestigungsfläche (17) aufweist, die derart ausgebildet ist, dass auf diese eine Dünnscbichtsolarzelle (21) aufbringbar ist,
1.1.3 in der ersten Position stapelbar ist und
1.1.4 in der zweiten Position derart auf einem Untergrund aufstellbar ist, dass die Befestigungsfläche (17) schräg zum Untergrund verläuft;
1.2 einer Dünnschichtsolarzelle (21), die
1.2.1 auf die Befestigungsfläche (17) aufgebracht ist.

2. Transportables Kleinkraftwerk (1) nach einem oder mehreren der vorhergehenden Ansprüche, bei dem der Aufsteller (3) aus wenigstens einer Kunststoffstrukturkammerplatte gefertigt ist.

3. Transportables Kleinkraftwerk (1) nach einem oder mehreren der vorhergehenden Ansprüche, bei dem die Dünnschichtsolarzelie (21) ein Trägermaterial in Form einer flexiblen Kunststofffolie aufweist.

4. Transportables Kleinkraftwerk (1) nach einem oder mehreren der vorhergehenden Ansprüche, bei dem die Dünnschichtsoiarzelle (21) auf die Befestigungsfläche (17) aufgeklebt ist.

5. Transportables Kleinkraftwerk (1) nach einem oder mehreren der vorhergehenden Ansprüche, bei dem die Dünnschichtsolarzelle (21) und die Befestigungsfläche (17) ein Laminat bilden.

6. Verfahren zur Errichtung eines transportables Kleinkraftwerkes (1) zur Umwandlung von Sonnenlicht in elektrische Energie mit folgenden Schritten:
6.1 zur Verfügungstellung eines transportablen Kleinkraftwerkes (1) nach Anspruch 1;
6.2 Transport des Kleinkraftwerkes (1) an einen Aufstellungsort des Kleinkraftwerkes (1), wobei der Aufsteller (3) während des Transportes die erste Position einnimmt;
6.3 Errichten des Kleinkraftwerkes (1) auf einem Untergrund am Aufstellungsort des Kleinkraftwerkes (1), wobei der Aufsteller (3) die zweite Position einnimmt.

## Geänderte Patentansprüche

### Geänderte Patentansprüche gemäss Regel 137(2) EPÜ.

**1.** Transportables Kleinkraftwerk (1) zur Umwandlung von Sonnenlicht in elektrische Energie mit folgenden Merkmalen:
1.1 einem Aufsteller (3), der eine erste Position und eine zweite Position einnehmen kann, wobei der Aufsteller (3)
1.1.1 aus einer einzigen Kunststoffplatte gefertigt ist,
1.1.2 wenigstens eine Befestigungsfläche (17) aufweist, die derart ausgebildet ist, dass auf diese eine Dünnschichtsolarzelle (21) aufbringbar ist,
1.1.3 in der ersten Position stapelbar ist und
1.1.4 in der zweiten Position derart auf einem Untergrund aufstellbar ist, dass die Befestigungsfläche (17) schräg zum Untergrund verläuft;
1.2 einer Dünnschichtsolarzelle (21), die
1.2.1 auf die Befestigungsfläche (17) aufgebracht ist.

**2.** Transportables Kleinkraftwerk (1) nach einem oder mehreren der vorhergehenden Ansprüche, bei dem der Aufsteller (3) aus einer Kunststoffstrukturkammerplatte gefertigt ist.

**1.** Transportables Kleinkraftwerk (1) zur Umwandlung von Sonnenlicht in elektrische Energie mit folgenden Merkmalen:
1.1 einem Aufsteller (3), der eine erste Position und eine zweite Position einnehmen kann, wobei der Aufsteller (3)
1.1.1 aus einer einzigen Kunststoffplatte gefertigt ist, die in mehrere gegeneinander schwenkbare Abschnitte unterteilt ist,
1.1.2 wenigstens eine Befestigungsfläche (17) aufweist, die derart ausgebildet ist, dass auf diese eine Dünnschichtsolarzelle (21) aufbringbar ist,
1.1.3 in der ersten Position stapelbar ist und
1.1.4 in der zweiten Position derart auf einem Untergrund aufstellbar ist, dass die Befestigungsfläche (17) schräg zum Untergrund verläuft;
1.2 einer Dünnschichtsolarzelle (21), die
1.2.1 auf die Befestigungsfläche (17) aufgebracht ist.

**2.** Transportables Kleinkraftwerk (1) nach einem oder mehreren der vorhergehenden Ansprüche, bei dem der Aufsteller (3) aus einer Kunststoffstrukturkammerplatte gefertigt ist.
